# EUROPEAN PATENT APPLICATION

(11) **EP 1 176 382 A2**
(43) Date of publication of application: **30.01.2002**
(21) Application number: 01306384.7
(22) Date of filing: 25.07.2001
(51) Int. Cl.: F28F 5/02, B32B 31/00

(54) **Roller arrangement, method for forming it and laminating machine comprising this arrangement**

(30) Priority: 28.07.2000 GB 0186056
(71) Applicant: ESSELTE N.V., 9100 St. Niklaas (BE)
(72) Inventor: Maes, Dirk, 9160 Lokeren (BE)
(74) Representative: Driver, Virginia Rozanne

(57) **Abstract**

A roller arrangement suitable for use in a laminating machine. The roller arrangement comprises: a laminating roller (8,10) of substantially cylindrical shape; a curved plate (1') disposed around at least a part of the outer cylindrical surface of the laminating roller, the curved plate (1') having a shape generally in conformance with that of the outer cylindrical surface of the laminating roller; and a heating layer (4') integral with at least a part of the outer surface of the plate. When the heating layer (4') is activated the laminating roller (8,10) is heated by the curved plate (1').

## Description

The present invention relates to a roller arrangement for use in a laminating machine, the laminating machine itself and to a method for forming a dual roller arrangement suitable for use in a laminating machine.

It is known in the art to provide a laminating machine for laminating objects such as plastics material pouches containing written or printed material such as paper or card. Such a pouch is generally formed from a single piece of plastics material, for example, clear PVC, which is folded along a centreline, leaving three open edges. The written or printed material is then placed inside the pouch and the pouch is fed through a laminating machine. The laminating machine heats the plastics material, thus sealing the three open edges and ensuring close contact between the pouch material and the written or printed material, to give a professional finish. In this way the written or printed material is protected from damage by substances and from tears and folds as well as from security tampering. This is particularly useful for items such as menus and identity cards.

One known type of laminating machine suitable for producing the above-described items in this way comprises a pair of heated cylindrical rollers disposed a suitable distance apart forming a throughput slit so that a pouch is held between the two rollers and can be sufficiently heated for the sealing process to occur. Both rollers rotate about their central axes such that a pouch can be fed in a controlled manner to achieve the desired sealing effect. This type of machine also comprises a motor for rotating the rollers and means for heating the rollers. The construction of the rollers and the heating arrangement varies depending on the level of lamination that is to be achieved. Low end machines provide an adequate laminated product, at a low cost. Professional machines must deliver a high quality laminated product, i.e. one free of tears and wrinkles and can be more expensive. However, in a more competitive market it is advantageous to keep the cost of professional machines low, while maintaining the quality. Another factor is the time it takes to heat the rollers to a temperature hot enough for use.

One current solution to the above is to provide an aluminium channel around the part of each roller distant from the throughput slit. A mica strip containing a coiled wire is placed on one side of the aluminium channel and is held in place by an aluminium pressing plate. When the wire is electrically heated, the mica heats up, and this heat is transferred to the aluminium channel, thus heating the air in between the aluminium channel and the roller. This in turn heats the roller. The drawbacks of this arrangement are that aluminium is expensive and that the arrangement requires a number of components which makes it cumbersome and costly to assemble. Moreover, it is relatively inefficient to heat the roller through air, which is a good insulator.

It would be desirable to mitigate the drawbacks of the above-mentioned laminating arrangements.

According to a first aspect of the present invention there is provided a roller arrangement suitable for use in a laminating machine, the roller arrangement comprising :
a laminating roller of substantially cylindrical shape;
a curved plate disposed around at least a part of the outer cylindrical surface of the laminating roller, the curved plate having a shape generally in conformance with that of the outer cylindrical surface of the laminating roller;
a heating layer in the form of a paste integral with at least a part of the outer surface of the plate;
whereby when the heating layer is activated the laminating roller is heated by the curved plate.

According to a second aspect of the present invention there is provided A method for forming a dual roller arrangement suitable for use in a laminating machine, the method comprising the steps of :
coating a hollow cylinder with a heating layer on at least a part of its outer cylindrical surface;
separating the hollow cylinder into two substantially equal cylinder parts by separating along the length of the cylinder, whereby each part is at least partially coated with the heating layer; and
disposing each of the two parts around a region of the outer cylindrical surface of respective laminating rollers, the laminating rollers being substantially cylindrical in shape and cooperating to form a throughput slit between the two laminating rollers through which an object can move so as to be laminated.

An embodiment of the present invention will now be described by way of example only, with reference to the accompanying drawings in which :
Figure 1 shows a cylinder used in the manufacture of a laminating roller arrangement;
Figure 2 shows a front view of a laminating roller arrangement suitable for use in a laminating machine; and
Figure 3 shows a perspective view of the laminating roller arrangement of figure 2.

In the figures, like reference numerals indicate like parts.

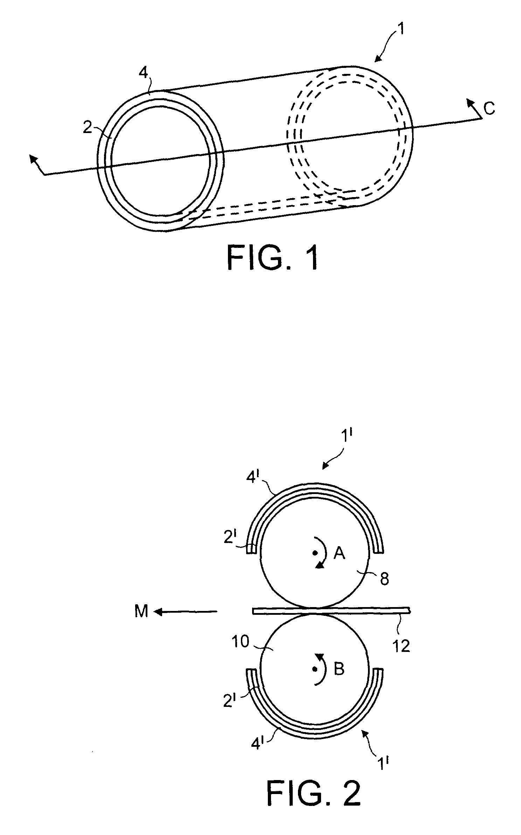

Figure 1 shows a cylinder, indicated generally by reference numeral 1. The cylinder 1 is shown in a perspective view from the front and side.

Cylinder 1 is constructed by taking a hollow, stainless steel cylinder, as shown by reference numeral 2. Stainless steel has been chosen as the material for this embodiment, with a thickness of about 2-3mm, but the invention is not limited to this material or thickness. Other types of metal would be suitable, or other materials which are good conductors of heat. Choice of material would depend on the particular application and the degree of cost limitation.

A thick film heating layer 4 is applied to stainless steel cylinder 2 as a paste. This paste is a combination of a conductor paste and resistor paste layer which is then covered by an insulator paste layer. Suitable materials for the conductor paste are gold, silver and palladium, but the invention is not limited to these. Suitable materials for the resistor paste are silver-palladium alloy and palladium oxide, but the invention is not limited to these. A suitable material for the insulator paste is ceramic glass, but the invention is not limited to this. The conductor and resistor pastes are applied in strips, and then the cylinder is heated, conveniently by being placed in an oven, so as to solidify these pastes. Then the insulator paste is applied and the cylinder is re-heated to solidify the insulator paste. Thus the entire thick film heating layer 4 is solidified. The arrangement of these two paste layers will be discussed in greater detail below.

At this stage, the cylinder 1 has been formed.

The next step is to separate the cylinder 1 into two halves. It is most convenient for the two halves to be equal, since laminating rollers are usually of equal size. Therefore the cylinder is cut along its length and across its full diameter, as indicated by cut line C in Figure 1. This is done by any suitable metal cutting method.

Turning now to Figure 2, a front view of a roller arrangement suitable for use in a laminating machine is shown. The arrangement comprises an upper laminating roller 8 and a lower laminating roller 10, which are both solid and cylindrical in shape. They are made of rubber. In this embodiment they are identical, but this is not an absolute requirement. In a laminating machine, rollers 8,10 are arranged to rotate about their central axes which extend along their length and are positioned so as to form a throughput slit between them. This throughput slit is large enough to allow a pouch to be laminated to be held between the rollers so that satisfactory lamination occurs. In Figure 2 a pouch 12, made of plastics material and containing printed material is shown between rollers 8, 10. Other objects could be laminated by this arrangement.

Figure 2 also shows the two halves of cylinder 1, indicated generally by reference numerals 1'. Each half 1' is formed of a stainless steel cylinder half 2' coated with a thick film heating layer half 4'. One half is shown to be disposed proximate to upper laminating roller 8 and the other half is shown to be disposed proximate to lower laminating roller 10. It can be appreciated that since each half 1' of cylinder 1 is semi-circular in profile, their shape is in conformity with the outer surface of laminating rollers 8, 10. Each half 1' is placed diametrically opposite to the throughput slit between laminating rollers 8, 10 and extends around approximately half the circumference. This is the most convenient arrangement to avoid fouling of the halves 1' with objects being laminated. The inside diameter of metal cylinder 2 is chosen to be just slightly larger than the diameter of laminating rollers 8, 10, so that the halves 1' can be disposed very close to laminating rollers 8, 10. The length is also chosen to be similar. The halves 1' are not fixed to laminating rollers 8, 10 because that would prevent them from rotating.

Laminating rollers 8, 10 are solid cylindrical rollers made of rubber, although the invention is not limited to this material. It can be seen from figure 2 that the stainless steel cylinder halves 2' are the part of the halves 1' positioned proximate to the laminating rollers 8, 10 and that the thick film layer halves 4' sit on the outer curve of the halves 2', more distant from laminating rollers 8, 10 than the stainless steel cylinder halves 2'. Arrow A indicates that laminating roller 8 rotates in a clockwise direction and arrow B indicates that laminating roller 10 rotates in an anticlockwise direction, and hence the pouch 12 which is being laminated moves through the throughput slit in the direction of arrow M, which is right to left in Figure 2. As indicated above, the cylinder halves 1' remain stationary when the rollers rotate.

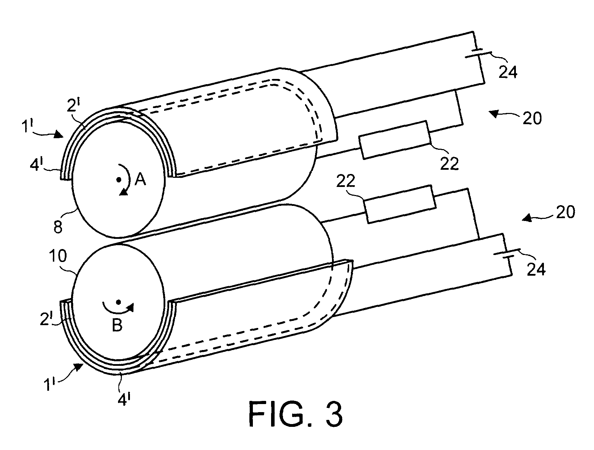

Figure 3 shows a perspective view of the arrangement of Figure 2 and includes a diagrammatic indication of the heating and temperature control of the laminating rollers and cylinder halves 1'. For this purpose there are provided two identical circuits indicated generally by reference numeral 20, each comprising a power supply 24 and a thermistor feedback loop 22. A thermistor is attached to laminating rollers 8, 10 for use with the feedback loop 22. A suitable thermistor for this purpose is a PTC thermistor, but the invention is not limited to this type of feedback arrangement. Other temperature regulation devices could be used, for example an NTC thermistor or a bi-metal strip. The power supply is connected to parts of the solidified conductor paste within thick film layer halves 4'. In this regard it should be noted that an area of the conductor paste towards the rear of the cylinder 1 (in both figures 1 & 3) is left free from being covered with insulator paste. Thus the thick film layer halves 4', the thermistor feedback circuit and the power supply combine to form a thick film circuit. It would of course be possible to replace the two power supplies 24 by a single power supply.

It should be noted that this arrangement provides a simplification over prior art arrangements in that there is no need for a slip ring arrangement for heating purposes since the components being heated do not rotate with the laminating rollers 8, 10. The temperature regulation device is attached by means of integration with the paste layers, and the necessary connections of Figure 3 are also integrated.

For convenience of drawing, the pouch 12 is omitted from Figure 3 but it will be appreciated that it is fed in from the side of the laminating rollers 8, 10 which are visible in Figure 3.

In operation, power supplies 24 are connected within their circuits 20 so as to provide a current to the film layer halves 4'. This causes the film layer halves 4' to heat up due to the solidified resistor paste contained within them. Since the film layer halves 4' are attached to the stainless steel cylinder halves 2', heat is conducted to them, and they in turn heat up. This process is aided by the presence of the insulator paste on top of the conductor and resistor pastes, which reduces heat loss from the surface of the cylinder halves 2'. Since stainless steel is a good radiator of heat, this heat is radiated from the stainless steel halves 2' to the laminating rollers 8, 10, and thus the surfaces of laminating rollers 8, 10 also heat up. When the surfaces of laminating rollers 8, 10 have reached a temperature which is high enough for satisfactory lamination, they are rotated so that objects to be laminated can be passed through the throughput slit between them. A laminating machine in which this arrangement is being used would generally have some indicator to the user that the laminating rollers had reached their correct temperature and that the user can begin to use the machine, as is well known in the art.

Since the laminating rollers 8, 10 have thermistors attached to them, their temperature can be constantly monitored and this information fed back via thermistor feedback circuits 22 so that the correct current can be supplied to thick layer halves 4' to maintain the metal halves 2' and consequently the surface of laminating rollers 8, 10 at the correct temperature. The details of such a temperature regulation circuit could vary within several known methods, one example being a proportional-integral (PI) controller circuit. A suitable range of operating temperature for the laminating rollers 8, 10 is 85-160 degrees Centigrade.

It can be seen that one improvement provided by this arrangement over the prior art is that since the metal cylinder is a good conductor and is thin, it heats up quickly. Due to the arrangement, it is only necessary for the surface of the laminating rollers 8, 10 to be heated. This is in contrast to some prior art arrangements in which the heat is applied directly to laminating rollers, resulting in much heat being used to heat up the entire body of the rollers, which is wasteful of the electrical heating energy and means that the surface takes a longer time to reach the necessary temperature.

It will be appreciated that the laminating machine will contain various other components such as motors for driving the laminating rollers and user-interface features. It should also be appreciated that although the figures show the laminating roller arrangement as operating in the horizontal direction, the invention is not limited to this configuration.

## Claims

1. A roller arrangement suitable for use in a laminating machine, the roller arrangement comprising :
a laminating roller of substantially cylindrical shape;
a curved plate disposed around at least a part of the outer cylindrical surface of the laminating roller, the curved plate having a shape generally in conformance with that of the outer cylindrical surface of the laminating roller;
a heating layer in the form of a paste integral with at least a part of the outer surface of the plate;
whereby when the heating layer is activated the laminating roller is heated by the curved plate.

2. A roller arrangement as claimed in claim 1, wherein the heating layer is applied to the outer surface of the plate.

3. A roller arrangement as claimed in claim 1 or claim 2, wherein the plate is a metal plate.

4. A roller arrangement as claimed in claim 3, wherein the metal plate is a stainless steel plate.

5. A roller arrangement as claimed in any preceding claim, wherein the heating layer comprises an electrically activatable heating resistor.

6. A roller arrangement as claimed in any preceding claim, wherein the heating layer is at least partially covered with an insulation layer.

7. A roller arrangement as claimed in any preceding claim, wherein the heating layer is part of a thick-layer or hybrid circuit.

8. A roller arrangement as claimed in claim 7, wherein the thick-layer or hybrid circuit comprises a thermistor which responds to the temperature of the laminating roller.

9. A roller arrangement as claimed in claim 8, wherein the thermistor is a PTC resistor.

10. A roller arrangement as claimed in any of claims 5-9, wherein the heating layer comprises a conductor layer and is provided with a power supply which is connectable to the conductor layer.

11. A laminating machine comprising at least two roller arrangements as claimed in any preceding claim, the roller arrangements being disposed in pairs, wherein the two laminating rollers of each roller arrangement form a throughput slit through which an object can move so as to be laminated.

12. A method for forming a dual roller arrangement suitable for use in a laminating machine, the method comprising the steps of :
coating a hollow cylinder with a heating layer on at least a part of its outer cylindrical surface;
separating the hollow cylinder into two substantially equal cylinder parts by separating along the length of the cylinder, whereby each part is at least partially coated with the heating layer; and
disposing each of the two parts around a region of the outer cylindrical surface of respective laminating rollers, the laminating rollers being substantially cylindrical in shape and cooperating to form a throughput slit between the two laminating rollers through which an object can move so as to be laminated.

13. A method according to claim 12, wherein the hollow cylinder is a metal cylinder.

14. A method according to claim 13, wherein the metal cylinder is a stainless steel cylinder.

15. A method according to any of claims 12 to 14, wherein the step of coating a hollow cylinder with a heating layer on at least a part of its outer cylindrical surface comprises the steps of :
depositing a layer of conductor paste and resistor paste in a strip arrangement on the hollow cylinder;
heating the hollow cylinder in an oven to solidify the conductor paste and resistor paste;
depositing a layer of an insulator paste on at least a part of the conductor paste and resistor paste; and
heating the hollow cylinder in an oven to solidify the insulator paste.

16. A method according to claim 15, wherein the resistor paste is electrically heatable, the method comprising the further step of attaching a power supply to the conductor paste on each cylinder part.

17. A method according to claim 16, comprising the further step of connecting a thermistor feedback circuit to each power supply and its respective laminating roller.

18. A method according to claim 17, wherein the thermistor feedback circuit comprises a PTC thermistor.
